# EUROPÄISCHE PATENTSCHRIFT

(11) **EP 3 447 784 B1**
(45) Veröffentlichungstag und Bekanntmachung des Hinweises auf die Patenterteilung: **27.11.2019**
(21) Anmeldenummer: 18187585.7
(22) Anmeldetag: 06.08.2018
(51) Int. Cl.: H01H 69/02, H01H 85/045, H01H 85/165, B33Y 80/00, B33Y 10/00, B29C 64/10

(54) **FERTIGUNGSVERFAHREN ZUR HERSTELLUNG EINES SICHERUNGSKÖRPERS, SICHERUNGSKÖRPER UND SCHMELZSICHERUNG**
FUSE, FUSE BODY, AND FABRICATION METHOD FOR THE PRODUCTION OF A FUSE BODY
PROCÉDÉ DE FABRICATION DESTINÉ À LA FABRICATION D'UN CORPS DE FUSIBLE, CORPS DE FUSIBLE ET COUPE-CIRCUIT FUSIBLE

(30) Priorität: 25.08.2017 DE 102017214909
(43) Veröffentlichungstag der Anmeldung: 27.02.2019
(73) Patentinhaber: Siemens Aktiengesellschaft, 80333 München (DE)
(72) Erfinder: Hüttinger, Robert, 94572 Schöfweg (DE)

(56) Entgegenhaltungen:
- EP-A1- 2 953 152
- DE-A1-102015 203 363
- FR-A- 1 027 504
- US-A- 4 282 504

## Beschreibung

Die Erfindung betrifft ein Fertigungsverfahren zur Herstellung eines Sicherungskörpers, einen Sicherungskörper für eine Schmelzsicherung sowie eine Schmelzsicherung zur Absicherung eines elektrischen Stromkreises.

Leiter, die von einem elektrischen Strom durchflossen werden, erwärmen sich. Bei unzulässig hohen Strömen kann es zu einer unzulässig starken Erwärmung des Leiters und infolgedessen zu einem Abschmelzen der den Leiter umgebenden Isolation kommen, was im weiteren Verlauf bis hin zu einem Kabelbrand führen kann. Um dieser Brandgefahr vorzubeugen, muss bei Auftreten eines zu hohen elektrischen Stromes, d.h. eines Überlaststromes oder eines Kurzschlussstromes, dieser elektrische Strom rechtzeitig abgeschaltet werden. Dies wird mit Hilfe einer sogenannten Überstrom-Schutzeinrichtung gewährleistet.

Eine mögliche Ausführungsform für eine derartige Überstrom-Schutzeinrichtung sind Schmelzsicherungen, welche durch das Abschmelzen eines oder mehrerer Schmelzleiter den Stromkreis unterbrechen, wenn die Stromstärke des durch die betreffende Schmelzsicherung abgesicherten Stromkreises einen bestimmten Wert über eine bestimmte Zeitdauer hinweg überschreitet. Die Schmelzsicherung besteht aus einem isolierenden Körper und weist zwei elektrische Anschlüsse auf, die im Inneren des isolierenden Körpers durch einen oder mehrere Schmelzleiter elektrisch leitend miteinander verbunden sind. Der Schmelzleiter, welcher einen im Vergleich zu den übrigen Leitern des Stromkreises reduzierten Querschnitt aufweist, wird durch den ihn durchfließenden Strom erwärmt und schmilzt, wenn der maßgebliche Nennstrom der Sicherung für eine vorbestimmte Zeitdauer deutlich überschritten wird. Aufgrund seiner guten Isolationseigenschaften wird als Material für den isolierenden Sicherungskörper zumeist Keramik verwendet.

Der Begriff "Keramik" bezeichnet dabei die sogenannte technische Keramik, d.h. Keramikwerkstoffe, welche in ihren Eigenschaften auf technische Anwendungen hin optimiert wurden. Sie unterscheidet sich von dekorativ eingesetzten Keramiken durch die Reinheit und die enger tolerierte Korngröße (den sogenannten Kornband) ihrer Ausgangsstoffe sowie durch spezielle Brennverfahren. Keramische Werkstoffe sind anorganisch, nicht-metallisch und polykristallin. In der Regel werden sie bei Raumtemperatur aus einer aus Keramikpulver, organischem Binder und Flüssigkeit gebildeten Rohmasse geformt und erhalten ihre typischen Werkstoffeigenschaften erst in einem Sintervorgang bei hohen Temperaturen. Als Ausgangsmaterialien kommen beispielsweise Bornitrid, Siliciumcarbid oder Aluminiumoxid in Betracht. Derartige keramische Bauteile zeichnen sich unter anderem durch eine hohe Hitzebeständigkeit sowie eine hohe elektrische Isolationsfähigkeit, eine hohe Abriebs- und Verschleißfestigkeit, sowie durch eine große Härte und mechanische Festigkeit bei vergleichsweise geringer Dichte und geringer thermischer Ausdehnung aus.

Schmelzsicherungen sind in verschiedenen Bauarten und Bauformen erhältlich. Neben einfachen Gerätesicherungen, welche einen einfachen Glaszylinder, in dem der Schmelzleiter aufgenommen ist, aufweisen, wurden für erhöhte Ansprüche Bauformen entwickelt, die einen mit Sand - zumeist Quarzsand - gefüllten Keramikkörper aufweisen: Hierbei wird zwischen Typen mit verfestigtem sowie mit unverfestigtem Quarzsand unterschieden. Bei einer mit Sand verfestigten Schmelzsicherung ist der Schmelzleiter von Quarzsand umgeben. In der Regel ist das Gehäuse der Schmelzsicherung dabei durch den Keramikkörper, in dem der verfestigte Sand, die elektrischen Anschlüsse sowie der Schmelzleiter aufgenommen bzw. gehaltert sind, gebildet. Der Quarzsand fungiert hierbei als Lichtbogenlöschmittel: wird der Nennstrom der Schmelzsicherung deutlich überschrittenen - beispielsweise aufgrund eines hohen Kurzschlussstromes - so führt dies zu einem Ansprechen der Schmelzsicherung, in dessen Verlauf der Schmelzleiter zunächst schmilzt und anschließend aufgrund der hohen Temperaturentwicklung verdampft. Dabei entsteht ein elektrisch leitendes Plasma, über das der Stromfluss zwischen den elektrischen Anschlüssen zunächst aufrecht erhalten wird - es bildet sich ein Lichtbogen. Indem sich der Metalldampf des verdampften Schmelzleiters auf der Oberfläche der Quarzsand-Körner niederschlägt, wird der Lichtbogen wiederum abgekühlt. In der Folge steigt der Widerstand im Inneren der Schmelzsicherung derart an, dass der Lichtbogen endgültig verlischt. Die durch die Schmelzsicherung zu schützende elektrische Leitung ist damit unterbrochen. Derartige Schmelzsicherungen sind aus den deutschen Offenlegungsschriften DE 10 2014 205 871 A1, DE 10 2012 210 292 A1 oder DE 10 2012 202 059 A1 prinzipiell vorbekannt.

Neben der Kurzschlussabschaltung dienen Schmelzsicherungen auch der Strombegrenzung bei Auftreten einer Überlast, wenn ein zu hoher elektrischer Strom über einen zu langen Zeitraum in dem zu schützenden Stromkreis fließt. Werden Schmelzsicherungen mit Keramikkörpern zur Überlastabschaltung verwendet, so tritt hierbei das Problem auf, dass der Löschsand, welcher im Inneren des keramischen Sicherungskörpers den Schmelzleiter umgibt, und der Keramikkörper selbst unterschiedliche Wärmeausdehnungskoeffizienten aufweisen. Durch die hieraus folgende unterschiedliche Wärmeausdehnung werden die verschiedenen Abschnitte bzw. Bereiche des keramischen Sicherungskörpers unterschiedlich hohen Kräften ausgesetzt. Diese führen zu Spannungen im Keramikkörper, die bis zum Platzen des Keramikkörpers reichen können. Aus diesem Grund werden derzeit für unterschiedliche Anwendungsfälle unterschiedliche Sicherungskörper aus unterschiedlichen keramischen Werkstoffe eingesetzt, die entsprechend unterschiedliche, an den jeweiligen Anwendungsfall angepassten Materialeigenschaften, beispielsweise Temperaturausdehnungskoeffizient oder mechanische Festigkeit, aufweisen. Diese anwendungsspezifisch-bedingte Typenvielfalt ist jedoch mit einem erhöhten Logistik- und Herstellaufwand - und damit mit höheren Kosten - verbunden. Weiterhin stoßen keramische Sicherungskörper bei der Forderung nach immer höheren Nennströmen auch an ihre technischen Grenzen.

US 4,282,504 offenbart eine Schmelzsicherung gemäß dem Oberbegriff von Anspruch 1.

Der Erfindung liegt daher die Aufgabe zugrunde, ein Fertigungsverfahren zur Herstellung eines Sicherungskörpers für eine Schmelzsicherung, einen Sicherungskörper sowie eine Schmelzsicherung zur Absicherung eines elektrischen Stromkreises bereitzustellen, welche die vorstehend genannten Nachteile zumindest teilweise überwinden.

Diese Aufgabe wird erfindungsgemäß durch das Fertigungsverfahren zur Herstellung eines Sicherungskörpers, durch den Sicherungskörper für eine Schmelzsicherung sowie durch die Schmelzsicherung zur Absicherung eines elektrischen Stromkreises gemäß den unabhängigen Ansprüchen gelöst. Vorteilhafte Ausgestaltungen der Erfindung sind Gegenstand der abhängigen Ansprüche.

Bei dem erfindungsgemäßen Fertigungsverfahren zur Herstellung eines Sicherungskörpers für eine Schmelzsicherung zur Absicherung eines elektrischen Stromkreises wird der Sicherungskörper aus isolierendem Material einstückig mittels eines additiven Fertigungsverfahrens hergestellt. Dabei werden durch das Fertigungsverfahren zumindest ein vorbestimmter erster Abschnitt des Sicherungskörpers, welcher eine erste physikalische Massendichte aufweist, sowie zumindest ein vorbestimmter zweiter Abschnitt des Sicherungskörpers, welcher eine zur ersten physikalischen Massendichte ungleiche zweite physikalische Massendichte aufweist, hergestellt. Auf diese Weise werden durch das Fertigungsverfahren der zumindest eine erste Abschnitt und der zumindest eine zweite Abschnitt hinsichtlich ihrer mechanischen Elastizität sowie ihrer mechanischen Festigkeit an die jeweilige lokale Kraftbeanspruchung des Sicherungskörpers angepasst.

Der Begriff des "Additiven Fertigungsverfahrens" (engl. Additive Manufacturing) ist eine umfassende Bezeichnung für die bisher als "Rapid Prototyping" bezeichneten Verfahren zur schnellen und kostengünstigen Herstellung von Modellen, Mustern, Prototypen, et cetera. Bei diesen Fertigungsverfahren erfolgt die Herstellung auf Basis rechnerinterner Datenmodelle des zu fertigenden Produkts aus formlosen (Flüssigkeiten, Pulver, etc.) oder formneutralen (band-, drahtförmig) Material mittels chemischer und/oder physikalischer Prozesse. Umgangssprachlich wird für den Begriff des "additiven Fertigungsverfahrens" auch der Begriff "3D-Druck" verwendet.

Diese Verfahren haben den Vorteil, dass das zu fertigende Produkt als digitales Strukturmodell an die zu erwartende, anwendungsspezifische Beanspruchung angepasst werden kann, indem an bestimmten Stellen des Produkts mehr oder weniger Material platziert wird. Bezogen auf den Sicherungskörper bedeutet dies, dass der zumindest eine vorbestimmte erste Abschnitt sowie der zumindest eine vorbestimmte zweite Abschnitt, welche aufgrund ihrer räumlichen Position am Sicherungskörper unterschiedlichen Beanspruchungen ausgesetzt sind, hinsichtlich ihrer mechanischen Elastizität sowie ihrer mechanischen Festigkeit durch das Fertigungsverfahren an die jeweilige anwendungsspezifische Beanspruchung angepasst werden können.

Auf diese Weise kann bei gleichem Materialeinsatz die Festigkeit, und damit die Einsatzvielfalt des Sicherungskörpers - und damit der Schmelzsicherung - deutlich erhöht werden. Die Typenvielfalt an unterschiedlichen Sicherungskörpern wird dadurch deutlich verringert. Andererseits können bei gleichbleibenden Nennströmen der Materialeinsatz - und damit die Materialkosten - deutlich reduziert werden, ohne die mechanische Festigkeit in den relevanten Abschnitten des Sicherungskörpers zu reduzieren. Auf diese Weise sind kompaktere Bauformen, welche sowohl ein geringeres Gewicht als auch ein geringeres Volumen aufweisen, realisierbar.

In einer vorteilhaften Weiterbildung des Fertigungsverfahrens wird der Sicherungskörper aus einem keramischen und/oder aus einem Kunststoff-Material hergestellt.

Neben rein keramischen Sicherungskörpern ist es ebenso möglich, Mischformen aus Keramik und Kunststoff herzustellen. Auf diese Weise können die physikalischen Eigenschaften, beispielsweise die mechanische Elastizität derartiger Sicherungskörper, noch breiter - und damit noch spezifischer - an den jeweiligen Anwendungsfall angepasst werden. Die Einsatzvielfalt wird dadurch weiter erhöht, die Typenvielfalt kann infolgedessen weiter reduziert werden.

In einer weiteren vorteilhaften Weiterbildung des Fertigungsverfahrens wird der Sicherungskörper mittels Laserschmelzen oder Lasersintern hergestellt.

Laserschmelzen und Lasersintern sind generative Schichtbauverfahren, bei denen das zu fertigende Werkstück Schicht für Schicht aufgebaut wird. Durch die Wirkung der Laserstrahlen können somit beliebige dreidimensionale Geometrien - inklusive Hinterschneidungen - erzeugt werden, die sich bei Verwendung konventioneller urformender oder umformender Fertigungsverfahren nicht herstellen lassen. Laserschmelzen und Lasersintern haben sich als geeignete Verfahren zur Herstellung keramischer Erzeugnisse herausgestellt.

In einer weiteren vorteilhaften Weiterbildung des Fertigungsverfahrens wird der zumindest eine erste Abschnitt an den Randbereichen des Sicherungskörpers hergestellt.

In einer weiteren vorteilhaften Weiterbildung des Fertigungsverfahrens wird der zumindest eine erste Abschnitt im Bereich der Körpermitte des Sicherungskörpers hergestellt.

Beim Auslösen einer Schmelzsicherung unterscheidet sich die mechanische Belastung im Bereich der Körpermitte des Sicherungskörpers deutlich von der mechanischen Belastung an dessen Randbereichen. Daher ist es sinnvoll, diese Bereiche mit Hilfe des additiven Fertigungsverfahrens unterschiedlich auszubilden: dabei wird an stark beanspruchten Stellen mehr Material eingebracht, wodurch der Sicherungskörper an diesen Stellen eine höhere physikalische Massendichte - und damit eine höhere mechanische Festigkeit - aufweist. Umgekehrt kann in weniger beanspruchten Bereichen des Sicherungskörpers der Materialeinsatz reduziert werden, wodurch der Sicherungskörper an diesen Stellen eine geringere physikalische Massendichte - und damit eine geringere mechanische Festigkeit - aufweist.

In einer weiteren vorteilhaften Weiterbildung des Fertigungsverfahrens weist der Sicherungskörper die geometrische Form eines Hohlzylinders auf. Hierunter ist zu verstehen, dass der Sicherungskörper im Wesentlichen die geometrische Form eines Hohlzylinders aufweist, d.h. die Zylinder-Mantelfläche wird mittels des additiven Fertigungsverfahrens hergestellt. Hierunter sind auch an die Zylinderform angenäherte Formen, insbesondere an die Zylinderform angenäherte Prismen, zu verstehen.

Der erfindungsgemäße Sicherungskörper für eine Schmelzsicherung zur Absicherung eines elektrischen Stromkreises ist mittels eines Fertigungsverfahrens der vorstehend beschriebenen Art hergestellt und weist zumindest einen vorbestimmten ersten Abschnitt, aufweisend eine erste physikalische Massendichte, sowie zumindest einen vorbestimmten zweiten Abschnitt, aufweisend eine zur ersten physikalischen Massendichte ungleiche zweite physikalische Massendichte, auf. Dabei sind der zumindest eine erste Abschnitt und der zumindest eine zweite Abschnitt hinsichtlich ihrer mechanischen Elastizität und Festigkeit mit Hilfe des Fertigungsverfahrens an die jeweiligen lokale Kraftbeanspruchung des Sicherungskörpers anpassbar.

Der erfindungsgemäße Sicherungskörper zeichnet sich dadurch aus, dass der zumindest eine vorbestimmte erste Abschnitt sowie der zumindest eine vorbestimmte zweite Abschnitt, welche aufgrund ihrer räumlichen Position am Sicherungskörper unterschiedlichen mechanischen Beanspruchungen ausgesetzt sind, hinsichtlich ihrer mechanischen Elastizität und Festigkeit an die jeweilige anwendungsspezifische Beanspruchung angepasst sind. Auf diese Weise kann bei gleichbleibendem Materialeinsatz die Festigkeit des Sicherungskörpers deutlich erhöht werden. Andererseits kann bei gleichem Nennstrom der Materialeinsatz deutlich reduziert werden, ohne dabei in den relevanten, d. h. stark beanspruchten Abschnitten des Sicherungskörpers die mechanische Festigkeit reduzieren zu müssen. Auf diese Weise sind kompakte Bauformen, welche sich sowohl durch ein geringeres Gewicht als auch durch ein geringeres Bauvolumen aufweisen, realisierbar.

Die erfindungsgemäße Schmelzsicherung zur Absicherung eines elektrischen Stromkreises weist einen Sicherungskörper der vorstehend beschriebenen Art sowie einen Schmelzleiter, welcher in dem Sicherungskörper aufgenommen und gehaltert ist, auf.

Hinsichtlich der prinzipiellen Vorteile der erfindungsgemäßen Schmelzsicherung wird auf die vorstehenden Ausführungen zu den Vorteilen des erfindungsgemäßen Sicherungskörpers verwiesen.

In einer vorteilhaften Weiterbildung der Schmelzsicherung ist der Sicherungskörper mit einem Löschmittel gefüllt, so dass der Schmelzleiter, von dem Löschmittel umgeben, in dem Sicherungskörper aufgenommen und gehaltert ist.

Als Löschmittel wird zumeist Löschsand, insbesondere Quarzsand, verwendet. Bei mit Sand verfestigten Schmelzsicherungen dient der Quarzsand neben seiner Funktion als Lichtbogenlöschmittel auch der räumlichen Positionierung des Schmelzleiters im Sicherungskörper.

Im Folgenden werden Ausführungsbeispiele des Fertigungsverfahrens zur Herstellung eines Sicherungskörpers für eine Schmelzsicherung, des Sicherungskörpers sowie der Schmelzsicherung zur Absicherung eines elektrischen Stromkreises unter Bezug auf die beigefügten Figuren näher erläutert. In den Figuren sind:
- Figur 1: eine schematische Darstellung zum prinzipiellen Aufbau einer Schmelzsicherung;
- Figuren 2 und 3: schematische Darstellungen eines ersten Ausführungsbeispiels des erfindungsgemäßen Sicherungskörpers;
- Figuren 4 und 5: schematische Darstellungen eines zweiten Ausführungsbeispiels des erfindungsgemäßen Sicherungskörpers.

In den verschiedenen Figuren der Zeichnung sind gleiche Teile stets mit dem gleichen Bezugszeichen versehen. Die Beschreibung gilt für alle Zeichnungsfiguren, in denen das entsprechende Teil ebenfalls zu erkennen ist.

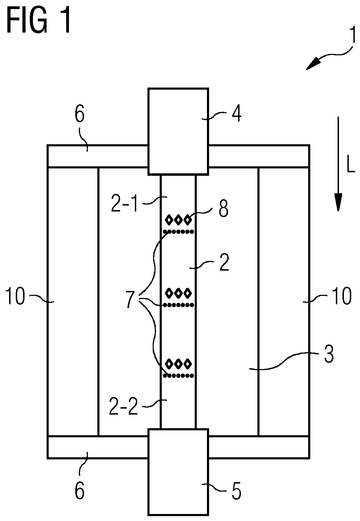

Figur 1 zeigt schematisch den prinzipiellen Aufbau einer Schmelzsicherung 1. Diese weist ein erstes Kontaktelement 4 sowie ein zweites Kontaktelement 5 auf, welche aus einem elektrisch leitenden Werkstoff, beispielsweise Kupfer, bestehen. Die Kontaktelemente 4 und 5 sind mechanisch fest und dicht mit einem Sicherungskörper 10 verbunden, welcher aus einem festen, nichtleitenden und möglichst hitzebeständigen Werkstoff, beispielsweise aus einer Keramik, besteht. Der Sicherungskörper 10 weist im Allgemeinen eine röhrenförmige Grundform auf und ist nach außen druckdicht, beispielsweise mit Hilfe zweier Verschlusskappen 6, verschlossen. Die Kontaktelemente 4 und 5 erstrecken sich dabei jeweils durch eine in den Verschlusskappen 6 ausgebildete Öffnung in einen Innenraum des Sicherungskörpers 10. Im diesem Innenraum ist ein sogenannter Schmelzleiter 2 angeordnet, welcher das erste Kontaktelement 4 und das zweite Kontaktelement 5 elektrisch leitend verbindet. Hierzu ist ein erstes Ende 2-1 des Schmelzleiters 2 mit dem ersten Kontaktelement 4, und ein zweites Ende 2-2 mit dem zweiten Kontaktelement 5 elektrisch leitend verbunden. Der verbleibende Innenraum der Schmelzsicherung 1 ist im vorliegenden Fall vollständig mit einem Löschmittel 3 befüllt, welches zum Löschen und Kühlen der Schmelzsicherung 1 im Auslösefall dient und den Schmelzleiter 2 vollständig umgibt. Als Löschmittel 3 wird beispielsweise Quarzsand verwendet. Anstelle des in Figur 1 dargestellten einen Schmelzleiters 2 ist es ebenso möglich, mehrere Schmelzleiter 2 elektrisch zueinander parallel geschaltet in dem Sicherungskörper 10 anzuordnen und entsprechend mit den beiden Kontaktelementen 4 und 5 zu kontaktieren.

Der Schmelzleiter 2 besteht im Allgemeinen aus einem gut leitenden Werkstoff wie Kupfer oder Silber und weist über seine Länge, d.h. in seiner Längserstreckungsrichtung L, mehrere Engstellenreihen 7 sowie ein oder mehrere Lotdepots 8 - sogenannte Lotpunkte - auf. Über die Engstellenreihen 7 sowie die Lotpunkte 8 kann die Auslösekennlinie des Schmelzleiters 2 - und damit der Schmelzsicherung 1 - an den jeweiligen Anwendungsfall angepasst werden. Bei Strömen, die kleiner sind als der Nennstrom der Schmelzsicherung 1, wird im Schmelzleiter 2 nur so viel Verlustleistung umgesetzt, dass diese in Form von Wärme schnell über den Sand, den Sicherungskörper 10 und die Kontakte 4 und 5 nach außen abgegeben werden kann. Die Temperatur des Schmelzleiters 2 steigt dabei nicht über dessen Schmelzpunkt hinaus an. Fließt ein Strom, der im Überlastbereich der Schmelzsicherung 1 liegt, so steigt die Temperatur der Sicherung 1 stetig weiter an, bis der Schmelzpunkt des Schmelzleiters 2 überschritten wird und dieser an einer der Engstellenreihen 7 durchschmilzt. Bei hohen Fehlerströmen - wie sie beispielsweise aufgrund eines Kurzschlusses auftreten - wird so viel Energie im Schmelzleiter 2 umgesetzt, dass dieser praktisch auf der ganzen Länge aufgeheizt wird und infolge dessen an allen Engstellenreihen 7 gleichzeitig schmilzt.

Da flüssiges Kupfer bzw. Silber noch gute elektrisch leitende Eigenschaften aufweist, wird der Stromfluss zu diesem Zeitpunkt noch nicht unterbrochen. Die aus dem Schmelzleiter 2 gebildete Schmelze wird folglich weiter aufgeheizt, bis sie schließlich in den gasförmigen Zustand übergeht und ein Plasma bildet. Dabei entsteht ein Lichtbogen, welcher den Stromfluss über das Plasma weiter aufrecht erhält. Im letzten Stadium einer Sicherungsabschaltung reagieren die leitfähigen Gase mit dem Löschmittel 3, welches bei konventionellen Schmelzsicherungen 1 zumeist aus Quarzsand besteht. Dieser Quarzsand wird aufgrund der durch den Lichtbogen bedingten, extrem hohen Temperaturen im Umfeld des Lichtbogens aufgeschmolzen, was zu einer physikalischen Reaktion des geschmolzenen Schmelzleitermaterials mit dem umgebenden Quarzsand führt. Da das dabei entstehende Reaktionsprodukt elektrisch nicht leitend ist, sinkt der Stromfluss zwischen dem ersten Kontaktelement 4 und dem zweiten Kontaktelement 5 der Schmelzsicherung 1 rasch gegen Null ab. Dabei ist jedoch zu beachten, dass einer bestimmten Masse an Schmelzleitermaterial auch eine entsprechende Masse an Löschmittel erfordert. Nur so kann sichergestellt werden, dass am Ende der Sicherungsabschaltung noch genügend Löschmittel 3 vorhanden ist, um das gesamte leitfähige Plasma wirksam zu binden.

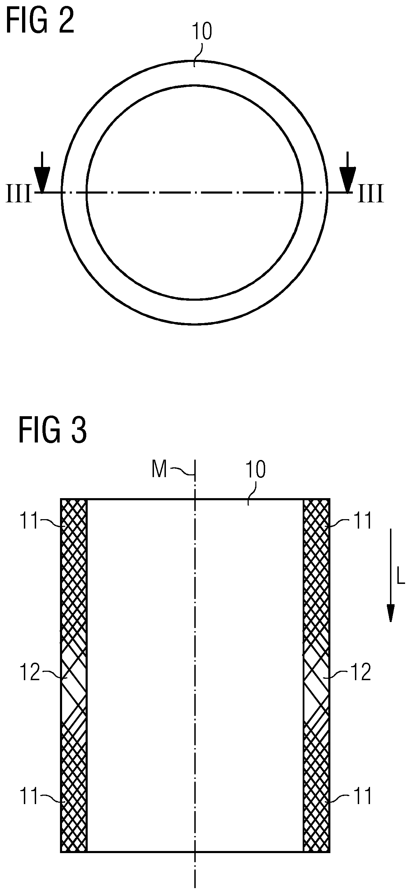

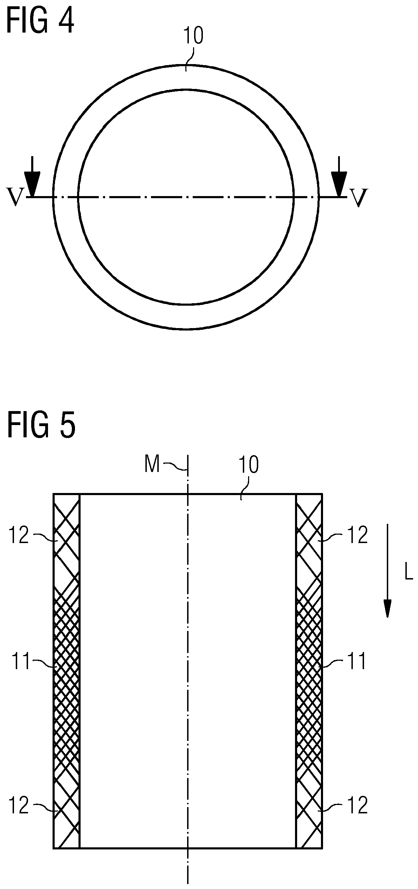

In den Figuren 2 bis 5 sind zwei Ausführungsbeispiele des erfindungsgemäßen Sicherungskörpers 10 für eine Schmelzsicherung 1 zur Absicherung eines elektrischen Stromkreises schematisch dargestellt. Die Figuren 2 und 3 zeigen dabei ein erstes Ausführungsbeispiel des erfindungsgemäßen Sicherungskörpers 10. Figur 2 zeigt dabei eine Seitenansicht des Sicherungskörpers 10, in Figur 3 ist eine zu Figur 2 korrespondierende Schnittzeichnung (Schnitt III-III in Figur 2) schematisch dargestellt. In den Figuren 4 und 5 ist ein zweites Ausführungsbeispiel des erfindungsgemäßen Sicherungskörpers 10 schematisch dargestellt, wobei in Figur 4 wiederum eine Seitenansicht des Sicherungskörpers 10 gezeigt und die hierzu korrespondierende Schnittdarstellung (Schnitt V-V in Figur 4) in Figur 5 schematisch dargestellt ist.

Die In den Figuren 2 bis 5 dargestellten Sicherungskörper 10 weisen die Form eines Hohlzylinders mit der Mittelachse M auf. Beiden Ausführungsbeispielen ist gemein, dass die Sicherungskörper 10 aus einem isolierenden Material, vorzugsweise aus einer technischen Keramik, einstückig mittels eines additiven Fertigungsverfahrens, beispielsweise Lasersintern oder Laserschmelzen, hergestellt wurden. Damit verfügen die Sicherungskörper 10 über eine digitale Struktur, ähnlich einer Tragwerk-Struktur, welche hinsichtlich ihrer physikalischen Eigenschaften, beispielsweise ihrer mechanischen Festigkeit, an verschiedene Anwendungsfälle mit unterschiedlicher Kraftbeanspruchung anpassbar ist. Die Sicherungskörper 10 weisen daher beide zumindest einen vorbestimmten ersten Abschnitt 11 mit einer ersten physikalischen Massendichte auf, sowie zumindest einen vorbestimmten zweiten Abschnitt 12 mit einer zweiten, von der ersten physikalischen Massendichte verschiedenen zweiten physikalischen Massendichte. Über die physikalische Massendichte können die physikalischen Eigenschaften des jeweiligen Abschnitts, insbesondere dessen Festigkeit, durch den automatisiert ablaufenden Herstellprozess so eingestellt werden, dass sie an die jeweilige externe Beanspruchung dieses Abschnitts, beispielsweise die dort herrschenden Zug-, Druck- oder Scherkräfte, angepasst sind.

In den Figuren 2 bis 5 der Zeichnung ist die unterschiedliche Massendichte durch verschiedene Gitterstrukturen, welche sich hinsichtlich ihres Gitterabstands voneinander unterscheiden, dargestellt. Ein enger Gitterabstand steht dabei für eine höhere physikalische Massendichte, ein weiterer Gitterabstand für eine geringere physikalische Massendichte. Demnach ist die physikalische Massendichte der vorbestimmten ersten Abschnitte 11 in den Darstellungen der Figuren 2 bis 5 höher als die physikalische Massendichte der vorbestimmten zweiten Abschnitte 12.

In dem in den Figuren 2 und 3 dargestellten ersten Ausführungsbeispiel sind die ersten Abschnitte 11, welche eine höhere physikalische Massendichte aufweisen, in den Randbereichen des hohlzylindrischen Sicherungskörpers 10 angeordnet, während der zweite Abschnitt 12, welcher eine geringere physikalische Massendichte aufweist, vorwiegend im Bereich der Körpermitte des Sicherungskörpers 10 angeordnet. Im Gegensatz dazu ist bei dem in den Figuren 4 und 5 dargestellten zweiten Ausführungsbeispiel der vorbestimmte ersten Abschnitt 11, welche eine höhere physikalische Massendichte aufweisen, im Bereich der Körpermitte des Sicherungskörpers 10 angeordnet, während die zweiten Abschnitte 12, welche eine geringere physikalische Massendichte aufweisen, in den Randbereichen des hohlzylindrischen Sicherungskörpers 10 angeordnet sind.

Durch eine höhere physikalische Massendichte ist eine höhere Festigkeit des Sicherungskörpers 10 erreichbar, allerdings auf Kosten einer geringeren Elastizität. Umgekehrt ermöglicht eine geringere physikalische Massendichte eine höhere Elastizität des Sicherungskörpers 10, allerdings auf Kosten einer geringeren Festigkeit. Eine höhere Festigkeit ist bei einer Kurzschlussauslösung der Schmelzsicherung 1 von Vorteil, um ein Platzen des Sicherungskörpers 10 wirksam zu verhindern. Eine andauernde Überlast-Situation hingegen führt aufgrund der damit einhergehenden Erwärmung der Schmelzsicherung 1 zu einer unterschiedlichen Wärmeausdehnung des Löschmittels 3 sowie des Sicherungskörpers 10. In diesem Fall ist eine höhere Elastizität des Sicherungskörpers vorteilhaft, um die mit der unterschiedlichen Wärmeausdehnung einhergehenden, mechanischen Spannungen abzubauen oder zumindest zu reduzieren. Derartigen Anforderungen kann durch den erfindungsgemäßen Sicherungskörper 10, welcher mit Hilfe des erfindungsgemäßen additiven Fertigungsverfahrens derart hergestellt wurde, dass er unterschiedliche Abschnitte mit unterschiedlichen physikalischen Eigenschaften aufweist, Rechnung getragen werden. Mit Hilfe des additiven Fertigungsverfahrens können Festigkeit und Elastizität des Sicherungskörpers 10 gezielt lokal variiert werden, indem die digitale Gitterstruktur des Sicherungskörpers 10 enger oder weiter ausgebildet wird.

### Bezugszeichenliste

- 1: Schmelzsicherung
- 2: Schmelzleiter
2-1 erstes Ende
2-2 zweites Ende
- 3: Löschmittel
- 4: erstes Kontaktelement
- 5: zweites Kontaktelement
- 6: Verschlusskappe
- 7: Engstellenreihe
- 8: Lotdepot
- 10: Sicherungskörper
- 11: erster Abschnitt
- 12: zweiter Abschnitt

- L: Längserstreckungsrichtung
- M: Mittelachse

## Patentansprüche

1. Fertigungsverfahren zur Herstellung eines Sicherungskörpers (10) für eine Schmelzsicherung (1) zur Absicherung eines elektrischen Stromkreises,
- wobei durch das Fertigungsverfahren zumindest ein vorbestimmter erster Abschnitt (11) des Sicherungskörpers (10), welcher eine erste physikalische Massendichte aufweist, sowie zumindest ein vorbestimmter zweiter Abschnitt (12) des Sicherungskörpers (10), welcher eine zur ersten physikalischen Massendichte ungleiche zweite physikalische Massendichte aufweist, hergestellt werden,
- so dass durch das Fertigungsverfahren der zumindest eine erste Abschnitt (11) und der zumindest eine zweite Abschnitt (12) hinsichtlich ihrer mechanischen Elastizität sowie ihrer mechanischen Festigkeit an die jeweiligen lokale Kraftbeanspruchung des Sicherungskörpers (10) angepasst werden,
**dadurch gekennzeichnet, dass**
der Sicherungskörper (10) aus isolierendem Material einstückig mittels eines additiven Fertigungsverfahrens hergestellt wird.

2. Fertigungsverfahren nach Anspruch 1,
**dadurch gekennzeichnet,**
**dass** der Sicherungskörper (10) aus einem keramischen und/oder aus einem Kunststoff-Material hergestellt wird.

3. Fertigungsverfahren nach einem der vorherigen Ansprüche,
**dadurch gekennzeichnet,**
**dass** der Sicherungskörper (10) mittels Laserschmelzen oder Lasersintern hergestellt wird.

4. Fertigungsverfahren nach einem der vorherigen Ansprüche,
**dadurch gekennzeichnet,**
**dass** der zumindest eine erste Abschnitt (11) an den Randbereichen des Sicherungskörpers (10) hergestellt wird.

5. Fertigungsverfahren nach einem der Ansprüche 1 bis 3,
**dadurch gekennzeichnet,**
**dass** der zumindest eine erste Abschnitt (11) im Bereich der Körpermitte des Sicherungskörpers (10) hergestellt wird.

6. Fertigungsverfahren nach einem der vorherigen Ansprüche,
**dadurch gekennzeichnet,**
**dass** der Sicherungskörper (10) die geometrische Form eines Hohlzylinders aufweist.

7. Sicherungskörper (10) für eine Schmelzsicherung zur Absicherung eines elektrischen Stromkreises,
**dadurch gekennzeichnet,**
- **dass** der Sicherungskörper (10) mittels eines Fertigungsverfahrens nach einem der Ansprüche 1 bis 6 hergestellt ist.

8. Schmelzsicherung (1) zur Absicherung eines elektrischen Stromkreises,
**dadurch gekennzeichnet,**
**dass** die Schmelzsicherung (1) einen Sicherungskörper (10) gemäß Anspruch 7, sowie einen Schmelzleiter (2), welcher in dem Sicherungskörper (10) aufgenommen und gehaltert ist, aufweist.

9. Schmelzsicherung (1) nach Anspruch 7,
**dadurch gekennzeichnet,**
- **dass** der Sicherungskörper (10) mit einem Löschmittel (3) gefüllt ist, und
- **dass** der Schmelzleiter(2), von dem Löschmittel (3) umgeben, in dem Sicherungskörper (10) aufgenommen und gehaltert ist.

## Claims

1. Manufacturing process for producing a fuse body (10) for a fusible link (1) for protecting an electric circuit,
- wherein at least one predetermined first portion (11) of the fuse body (10), which has a first physical mass density, and at least one predetermined second portion (12) of the fuse body (10), which has a second physical mass density unequal to the first physical mass density, are produced by the manufacturing process,
- so that the at least one first portion (11) and the at least one second portion (12) are adapted by the manufacturing process in their mechanical elasticity and also their mechanical strength to the respective local stress loading of the fuse body (10),
**characterized in that**
the fuse body (10) is produced in one piece from insulating material by means of an additive manufacturing process.

2. Manufacturing process according to Claim 1,
**characterized**
**in that** the fuse body (10) is produced from a ceramic and/or plastics material.

3. Manufacturing process according to one of the preceding claims,
**characterized**
**in that** the fuse body (10) is produced by means of laser melting or laser sintering.

4. Manufacturing process according to one of the preceding claims,
**characterized**
**in that** the at least one first portion (11) is produced at the peripheral regions of the fuse body (10).

5. Manufacturing process according to one of Claims 1 to 3, **characterized**
**in that** the at least one first portion (11) is produced in the region of the middle of the fuse body (10).

6. Manufacturing process according to one of the preceding claims,
**characterized**
**in that** the fuse body (10) has the geometrical form of a hollow cylinder.

7. Fuse body (10) for a fusible link for protecting an electric circuit,
**characterized**
**in that** the fuse body (10) is produced by means of a manufacturing process according to one of Claims 1 to 6.

8. Fusible link (1) for protecting an electric circuit,
**characterized**
**in that** the fusible link (1) has a fuse body (10) according to Claim 7, and a fusible element (2), which is accepted and secured in the fuse body (10).

9. Fusible link (1) according to Claim 7,
**characterized**
**in that** the fuse body (10) is filled with an arc extinguishing medium (3), and
**in that** the fusible element (2) is surrounded by the arc extinguishing medium (3), in which the fuse body (10) is accepted and secured.

## Revendications

1. Procédé de fabrication permettant de produire un corps de sécurité (10) pour un coupe-circuit (1) destiné à protéger un circuit électrique,
- dans lequel au moins une première section (11) prédéterminée du corps de sécurité (10) qui présente une première masse volumique physique, ainsi qu'au moins une deuxième section (12) prédéterminée du corps de sécurité (10) qui présente une deuxième masse volumique physique différente de la première masse volumique physique sont produites grâce au procédé de fabrication,
- de sorte que l'élasticité mécanique ainsi que la résistance mécanique de la au moins une première section (11) et de la au moins une deuxième section (12) sont adaptées à la contrainte de force locale respective du corps de sécurité (10) grâce au procédé de fabrication,
**caractérisé en ce que**
le corps de sécurité (10) est produit à partir d'un matériau isolant et d'un seul tenant au moyen d'un procédé de fabrication additif.

2. Procédé de fabrication selon la revendication 1,
**caractérisé en ce que**
le corps de sécurité (10) est produit à partir d'un matériau céramique et/ou d'un matériau plastique.

3. Procédé de fabrication selon l'une quelconque des revendications précédentes, **caractérisé en ce que**
le corps de sécurité (10) est produit par fusion laser ou frittage laser.

4. Procédé de fabrication selon l'une quelconque des revendications précédentes,
**caractérisé en ce que**
la au moins une première section (11) est produite au niveau des régions de bord du corps de sécurité (10).

5. Procédé de fabrication selon l'une quelconque des revendications 1 à 3,
**caractérisé en ce que**
la au moins une première section (11) est produite dans la région du centre de corps du corps de sécurité (10).

6. Procédé de fabrication selon l'une quelconque des revendications précédentes,
**caractérisé en ce que**
le corps de sécurité (10) présente la forme géométrique d'un cylindre creux.

7. Corps de sécurité (10) pour un coupe-circuit destiné à protéger un circuit électrique,
**caractérisé en ce que**
- le corps de sécurité (10) est produit au moyen d'un procédé de fabrication selon l'une quelconque des revendications 1 à 6.

8. Coupe-circuit (1) destiné à protéger un circuit électrique,
**caractérisé en ce que**
le coupe-circuit (1) présente un corps de sécurité (10) selon la revendication 7, ainsi qu'un conducteur fusible (2) qui est accueilli et maintenu dans le corps de sécurité (10).

9. Coupe-circuit (1) selon la revendication 7,
**caractérisé en ce que**
- le corps de sécurité (10) est rempli d'un agent extincteur (3), et
- le conducteur fusible (2) est entouré d'agent extincteur (3) et est accueilli et maintenu dans le corps de sécurité (10).
